# EUROPEAN PATENT SPECIFICATION

(11) **EP 1 942 140 B1**
(45) Date of publication and mention of the grant of the patent: **11.04.2012**
(21) Application number: 06791191.7
(22) Date of filing: 30.09.2006
(51) Int. Cl.: C08L 29/04, C08L 3/00

(54) **METHOD FOR PREPARING A HYDROPHOBIC BIODEGRADABLE MATERIAL**
VERFAHREN ZUR HERSTELLUNG EINES HYDROPHOBEN BIOLOGISCH ABBAUBAREN MATERIALS
PROCÉDÉ DE PRÉPARATION D'UN MATÉRIAU BIODEGRADABLE HYDROPHOBE

(30) Priority: 30.09.2005 CN 200510105196
(43) Date of publication of application: 09.07.2008
(73) Proprietor: Li, Xiaolu, Beijing 100036 (CN)
(72) Inventor: Li, Xiaolu, Beijing 100036 (CN)
(74) Representative: Rees, David Christopher
(86) International application number: PCT/CN2006/002605
(87) International publication number: WO 2007/036170

(56) References cited:
- WO-A-00/36006
- CN-A- 1 073 457
- CN-A- 1 330 683
- GB-A- 1 077 351
- US-A- 3 949 145
- US-A- 4 542 178
- US-A- 5 308 879
- US-A- 5 322 866
- US-A1- 2004 242 732
- WANG HUICAI ET AL.: 'STUDY ON THE BLENDING OF PVAL/STARCH' ENGINEERING PLASTICS APPLICATION vol. 32, no. 2, 2004, pages 27 - 29, XP008078885

## Description

### Technical Field

The present invention relates to a method for preparing a hydrophobic biodegradable material.

### Technical Background

CN 1405230A discloses a water-soluble and pollution-free plastic molded material which can be completely biodegraded within a short period. The material comprises polyvinyl alcohol, glycerol, triethylene glycol, sorbitol, fiber, white carbon black, superfine calcium carbonate, and modified starch. CN1405230A further discloses the preparation method for the material, which comprises adding 1-30 parts of glycerol into polyvinyl alcohol, stirring at high temperature to make the mixture be fully wetted; adding appropriate amount of plasticizer, cross linking agent, reinforcing agent, modifier, and filler; blending and reacting at 25-65°C for 5-50 min; charging into a single-screw or twin-screw extruder for granulation to obtain beads; and moding the beads at temperature of 150-250°C into film or foam. Unfortunately, when thermoplastically extruding the material prepared by the method disclosed in CN 1405230A at 160-190°C, the present inventor found that only a small amount of the material was in molten state, and the material became carbonized when heated to 200°C. This phenomenon indicates that, the material is not a thermoplastic material, can not be blow molded into film in molten state, and only can be prepared into cast film by casting method requiring no heat melting.

CN1357563A discloses a method for preparing starch-polyvinyl alcohol-polyester ternary system biodegradable film, characterized in that the raw materials comprise (by weight percentage): starch 30-65%, polyvinyl alcohol 15-40%, polyester 0-10%, plasticizer 10-20%, reinforcing agent ≤ 0.4%, wet strength agent 0.5-1.5%, and defoaming agent ≤ 0.4%, wherein the plasticizer is water and a ternary system of glycol, glycerol, and polyester polyol at weight ratio of 1-3:9-15:3-6. The biodegradable film is prepared by: firstly mixing polyvinyl alcohol and starch, then mixing with aqueous solution containing reinforcing agent, wet strength agent, and defoaming agent dissolved therein, further mixing with plasticizer, stirring evenly, extruding and granulating. The obtained material, like the material disclosed in CN 1405230A, is not a thermoplastic material, can not be blow molded into film in molten state, and only can be prepared into cast film by casting method requiring no heat melting. It is well known that, it is not easy to control the thickness of cast film during preparation, and usually the obtained cast film has large and nonuniform thickness. Additionally, compared with thermoplastically blow molded film, the cast film is poor in mechanical properties such as tensile strength at break, elongation at break, and right angle tear strength, and can not satisfy general requirements for mechanical properties of film product. Moreover, the production efficiency of cast film is very low, which is a major cause for high cost of the cast film product; and the casting method can only produce film product, and can not produce injection molded, foamed or extruded sheet product. The process for preparing the cast film into finished product are complicated, for example, when used for producing bags, a piece of cast film is folded, and then two side edges of the folded cast film are hot sealed. In blow molding process, the material only needs to be melted and blow molded into film to obtain the film product. Therefore, material containing polyvinyl alcohol is required to be capable of being blow molded in molten state to form film product, so as to make the film product have uniform thickness and improved mechanical properties.

### Summary of the Invention

The object of the present invention is to overcome the disadvantages that the available polyvinyl alcohol-containing biodegradable material of the prior art is hard to be blow molded, and to provide a hydrophobic biodegradable material capable of being blow molded into film product.

In order to make polyvinyl alcohol-containing biodegradable material achieve molten state, as a result of intensive studies on polyvinyl alcohol, the present inventor finds that a lot of hydroxyl groups exist in polyvinyl alcohol molecules, and form strong hydrogen bonding interaction therebetween, therefore, a lot of hydrogen bonds exist among and in polyvinyl alcohol molecules. Additionally, polyvinyl alcohol molecules are flexible, the molecules interweave together to form complicated molecule chain structure with high barrier property, and the interaction among the polymer molecules is much stronger than Van Der Waals Force among molecules of general compounds; therefore, higher melting temperature is required to overcome the interaction. In fact, polyvinyl alcohol has molten temperature up to 220-240°C which is higher than decomposition temperature thereof (about 200°C). As the molten temperature of polyvinyl alcohol is higher than its decomposition temperature, polyvinyl alcohol usually becomes decomposed and carbonized before melting, and can not reach stable molten state. On the other hand, only in molten state can polyvinyl alcohol react with components like starch to give stable molten biodegradable material. Hence, the available polyvinyl alcohol-containing biodegradable material can not realize molten state for thermoplastic processing since original hydrogen bonding interaction of polyvinyl alcohol can not be broken under aforementioned processing conditions.

It is presumed by the present inventor that, although the method disclosed in CN 1405230A adopts glycerol as plasticizer for plasticizing polyvinyl alcohol, the plasticizer can not break interwoven interaction among polyvinyl alcohol molecules, and can not penetrate into polyvinyl alcohol molecules; the mixing between the plasticizer and polyvinyl alcohol is just a simple physical blending, polyvinyl alcohol in the mixture is still in its original state, and the plasticizer can not exert plasticizing and modification actions to polyvinyl alcohol; therefore, the plasticizer can not lower melting temperature of polyvinyl alcohol, and can not help polyvinyl alcohol achieve molten state, nor help mixture of polyvinyl alcohol, plasticizer and starch achieve molten state.

The preparation method disclosed in CN1357563A comprises mixing polyvinyl alcohol and starch, and then adding aqueous solution thereto. As water absorbance of starch is much higher than that of polyvinyl alcohol, most added water is quickly absorbed by starch, only a small amount of water is absorbed by polyvinyl alcohol, and most polyvinyl alcohol is still in its original physical state, i.e., flocculent, granular, or powdery states at room temperature. As starch swells and gelatinizes to coat polyvinyl alcohol therein after absorbing water, contact between water and polyvinyl alcohol is blocked, water and polyvinyl alcohol can not contact with each other regardless of the amount of the added water, and most polyvinyl alcohol is still in its original state and can not achieve molten state. Moreover, the added plasticizer still can not enter into polyvinyl alcohol to exert plasticizing function, and can only be absorbed by starch, therefore the aforementioned mixture is a simple mixture of water-containing starch, polyvinyl alcohol, plasticizer, and auxiliary agents, and still can not achieve molten state.

It is well known to those skilled in the art that the conventional process of granulation and subsequent blow molding comprises heating to melt a mixture in a single-screw or twin-screw extruder to make the mixture in molten state, and at the same time the material is required to have a certain fluidity, only such molten material can be blow molded at the die of a film blower. However, the polyvinyl alcohol-containing materials of the prior art, such as the materials disclosed in CN1357563A and CN 1405230A, are all simple mixtures, in which polyvinyl alcohol is essentially not plasticized, and most polyvinyl alcohol exists in its original state. When these simple mixtures are heated, if the heating temperature is higher than the melting temperature of polyvinyl alcohol, at least part of polyvinyl alcohol is decomposed and carbonized before melting; in the other hand, if the heating temperature is lower than the melting temperature, polyvinyl alcohol can not melt, such that polyvinyl alcohol can not realize real blending and reacting with plasticizer and starch in molten state to form stable molten reaction product, and hence the mixtures can not realize blow molding.

In general, water is disbeneficial to the processing of thermoplastic material, free water has no compatibility with thermoplastic material, which can lead to generation of a lot of bubbles even crackings during processing of thermoplastic material, hence the appearance and physical properties of the product are severely damaged. Therefore, water content in raw materials and water present in the processing have to be stringently controlled during the processing of thermoplastic material.

Surprisingly, the present inventor has found that a mixture, prepared by mixing water and polyvinyl alcohol first, allowing polyvinyl alcohol to be fully swollen by water to form water-containing polyvinyl alcohol, further adding polyol and starch, and mixing evenly, can be extruded and granulated in molten state to give hydrophobic biodegradable granular material which can reach stable melting temperature significantly lower than decomposition temperature thereof. The granular material has a melting temperature of 130-210°C, preferably 140-200°C, decomposition temperature of 260-420°C, preferably 270-410°C, and good thermoplasticity (processability), which can be prepared into film product by blow molding. The possible explanation is that: water has very small molecular weight; when water contacts with polyvinyl alcohol alone, water can easily enter into internal structure of polyvinyl alcohol molecules to open polyvinyl alcohol molecule chains to make originally interwoven polyvinyl alcohol molecule chains fully extend, and allow the plasticizer to more easily enter into polyvinyl alcohol to jointly plasticize and modify polyvinyl alcohol; the fully plasticized and modified polyvinyl alcohol can be heated into stable molten state, and can react with starch and plasticizer in molten condition to obtain reaction product. The reaction product has stable melting temperature of 130-210°C which is significantly lower than its decomposition temperature of 260-420°C. The aforementioned properties determine that the material is a completely new thermoplastic material, and make it possible to thermoplastically mold biodegradable material.

The present invention provides a method for preparing a hydrophobic fully biodegradable material, wherein the material is a product formed by melting a mixture containing polyol, and water-containing polyvinyl alcohol, and optionally containing starch; the polyvinyl alcohol is hydrophobic polyvinyl alcohol; and the content of the polyol is 25-45 wt% based on the total weight of the mixture. The polyol is one or more selected from ethylene glycol, diethylene glycol, propylene glycol, glycerol, sorbitol, polyethylene glycol or its low molecular weight condensate (molecular weight of 400 or lower), pentaerythritol, and incomplete esterification product of long-chain fatty acid (such as glycerol monostearate).

The hydrophobic biodegradable material provided by the method of the present invention is a product formed by melting a mixture, and has a melting temperature of 130-210°C, preferably 140-200°C which is much lower than its decomposition temperature of 260-420°C, preferably 270-410°C, therefore the material can reach molten state, has thermoplastic processability incomparable to that of common mixture obtained by simple physical mixing of polyvinyl alcohol, starch, and polyol, and can achieve real extrusion granulation and blow molding.

The hydrophobic biodegradable material provided in the present invention can be prepared into film product by blow molding, and the obtained film product has good tensile strength at break, elongation at break, and right angle tear strength; and the obtained film product also has extremely high biodegradation degree (more than 60% for 45 days, more than 75% for 60 days, and more than 92% for 99 days), which complies with the requirement (more than 90% within 180 days) for biodegradable product prescribed in ISO 14855. As the material is hydrophobic, the prepared film product has not any deformation and has little change in tensile strength at break, elongation at break, or right angle tear strength after being soaked in water at room temperature for 1h, indicating that the product has excellent water-resistance. B y adding organic carboxylic acid during preparation of water-soluble biodegradable material, film product prepared from the material can be prevented from sticking with each other.

### Brief Description of Drawings

Fig.1 is the differential scanning calorimetry (DSC) curve of hydrophobic biodegradable material prepared by the example 1 of the present invention;
Fig.2 is the thermogravimetric curve of hydrophobic biodegradable material prepared by the example 1 of the present invention;
Fig.3 is the scanning electron microscope (SEM) image of original starch used in the example 1 of the present invention;
Fig.4 is the SEM image of the cross section of the hydrophobic biodegradable material in the example 1 of the present invention.

### Detailed Description of the Preferred Embodiments

The hydrophobic fully biodegradable material provided by the present invention is a product formed by melting a mixture containing polyol, and water-containing polyvinyl alcohol, and optionally containing starch, the polyvinyl alcohol is hydrophobic polyvinyl alcohol, and the content of the polyol is 25-45 wt% based on the total weight of the mixture. The polyol is one or more selected from ethylene glycol, diethylene glycol, propylene glycol, glycerol, sorbitol, polyethylene glycol or its low molecular weight condensate (molecular weight of 400 or lower), pentaerythritol, and incomplete esterification product of long-chain fatty acid (such as glycerol monostearate).

Based on total weight of the mixture, the content of the water-containing polyvinyl alcohol is 5-70 wt%, preferably 10-65 wt%; the content of starch is 0-70 wt%, preferably 10-65 wt%; and the content of polyol is 25-45 wt%, preferably 25-40 wt%.

The hydrophobic biodegradable material provided in the present invention has a melting temperature of 130-210°C, preferably 140-200°C, and a decomposition temperature of 260-420°C, preferably 270-410°C. The melting temperature is significantly lower than the decomposition temperature, such that the material is very suitable for thermo-processing. For example, in the example 1, the mixture contains 21 wt% of water-containing polyvinyl alcohol, 15 wt% of glycerol, 15 wt% of sorbitol, 40 wt% of starch, 2 wt% of methyl cellulose, 2 wt% of zinc stearate, 2 wt% of epoxidized soybean oil, 2 wt% of liquid paraffin, 0.5 wt% of borax, and 0.5 wt% of formaldehyde; and the resulting material has a melting temperature of 145-190°C, and a decomposition temperature of 272-375°C. The melting temperature and decomposition temperature of the obtained materials may vary depending on the content of each component.

In said water-containing polyvinyl alcohol, the weight ratio of polyvinyl alcohol to water may be from 0.75 to less than 1.5.

The polyvinyl alcohol has general formula of -(CH₂CHOH)ₙ-, which is white or pale yellow flocculent, granular, or powdery solid at ambient temperature. Polyvinyl alcohol is mainly obtained by alcoholyzing polyvinyl acetate, i.e. reducing polyvinyl acetate. According to the present invention, the polyvinyl alcohol can be any available hydrophobic polyvinyl alcohol which can be prepared by any known method or purchased. The hydrophobic polyvinyl alcohol refers to polyvinyl alcohol only dissolvable in water above 45°C. According to the present invention, the hydrophobic polyvinyl alcohol has an alcoholysis degree of 80-100%, preferably 85-98%, and median polymerization degree from more than 2000 to 3000, preferably 2050-3000. The median polymerization degree represents the size of the polyvinyl alcohol molecule, that is, a higher median polymerization degree indicates a higher number average molecular weight and a stronger hydrophobicity of the polyvinyl alcohol.

The polyol is preferably one or more selected from glycerol, sorbitol and pentaerythritol. Polyol can exert plasticizing action on polyvinyl alcohol. T he polyol can be used alone or in combination of two or more, and is preferably used in combination.

Additionally, the mixture may further comprise cellulose-based polymer which can also exert plasticizing action on polyvinyl alcohol. T he cellulose-based polymer is one or more selected from carboxyl methyl cellulose (CMC), methyl cellulose, ethyl cellulose, hydroxypropyl methyl cellulose (HPMC), and hydroxypropyl ethyl cellulose. Based on the total weight of the mixture, the content of the cellulose-based polymer may be 0-10 wt%, preferably 2-6 wt%.

The starch can be various starches in prior arts, such as natural starch or modified starch. T he natural starch can be one or more selected from corn starch, potato starch, sweet potato starch, tapioca starch, wheat starch, and bean starch, which can be branched starch and/or linear starch. Examples of the modified starch include but are not limited to oxidized starch, esterified starch, and etherified starch. The esterified starch can be one or more selected from starch phosphate, starch sulfate, starch nitrate, starch acetate, and starch propionate. The etherified starch can be one or more selected from carboxy starch, cyano starch, amide starch, hydroxyalkyl starch, alkyl starch, aryl starch, primary amine starch ether, secondary amine starch ether, ternary amine starch ether, onium starch ether, and cyanamide starch. The addition of the starch can correspondingly decrease the content of the polyvinyl alcohol, such that the cost of the raw material for the hydrophobic biodegradable material due to the far lower price of the starch especially common starch than that of the polyvinyl alcohol. The biodegradability of the hydrophobic biodegradable material may be improved by the addition of the starch. However, the addition of the starch may adversely affect the water-resistance of the material due to the hydrophilicity of the starch, and the mechanical properties of the product prepared therefrom are relatively lowered. Take the biodegradability, water-resistance, mechanical properties, and cost into consideration, the composition of the material may vary according to the practical demand. According to the present invention, the mixture may contain 0-70 wt%, preferably 10-65 wt% of starch based on its total weight.

The mixture may further contain a polyester in order to further improve the water-resistance of the hydrophobic biodegradable material. Any hydrophobic polyester compound, for example the polyester compound having ester group as side chain, may be used. The polyester compound may be aliphatic and/or aromatic polyester compound. The aliphatic polyester compound includes, but is not limited to polycaprolactone, polycarbonate, poly β-hydrobutyrate (PHB), and PHB is preferred. Based on the total amount of the mixture, the content of the polyester may be 0-20 wt%, preferably 0.5-15 wt%, and more preferably 3-10 wt%.

Another approach to improve the water-resistance of the hydrophobic biodegradable material is to block the hydrophilic hydroxyl in the component such as the water-containing polyvinyl alcohol by any conventional method. For example, the hydroxyl may be blocked by the crosslink condensation between the polyvinyl alcohol molecules to generate hydrophobic ether bond, while the polymerization degree and molecular weight are increased, leading to the improvement of the water-resistance. Alternatively, the hydroxyl may be blocked by using other end-capping reagent to convert the hydroxyl into a hydrophobic group.

Accordingly, the mixture may further contain an end-capping reagent in order to further improve the water-resistance of the hydrophobic biodegradable material according to the present invention. The end-capping reagent may be one or more selected from borax, boric acid, formaldehyde, bialdehyde, trimethyl melamine, bimethyl urea, bimethyl ethyl urea, dichromate, chromium nitrate, and organotitanate. The bialdehyde includes, but is not limited to glyoxal, malonaldehyde, succindialdehyde, glutaraldehyde and isomer thereof, hexanedialdehyde and isomer thereof, pimelic dialdehyde and isomer thereof, and suberic dialdehyde and isomer thereof. Based on the total amount of the mixture, the content of the end-capping reagent may be 0-15 wt%, preferably 0.5-15 wt%, and more preferably 0.5-10 wt%.

Additionally, the present inventor has found that products (such as film product) prepared from the composition containing aforementioned components are prone to sweating (i.e., many oily liquid beads on its surface) at ambient condition with temperature above 23° C and relative humidity above 60%, and sticking is likely to occur among multiple products and different parts of single product due to the stickiness of the oily liquid beads, which brings inconvenience for use. The present inventor also found that the problem could be solved by adding organic carboxylic acid to the mixture. Accordingly, the mixture can preferably further contain organic carboxylic acid at the content of 0-10 wt%, preferably 0.5-8 wt%, and more preferably 2-7 wt% based on the total weight of the mixture.

The organic carboxylic acid can be one or more of C₁₋₂₀ carboxylic acids, preferably one or more of C₁₋₁₂ carboxylic acids. The organic carboxylic acid can be monocarboxylic acid or polycarboxylic acid, which can be, but not limited to, formic acid, acetic acid, propionic acid, butyric acid and isomers thereof, pentanoic acid and isomers thereof, caproic acid and isomer thereof, heptanoic acid and isomer thereof, caprylic acid and isomer thereof, nonanoic acid and isomer thereof, capric acid and isomer thereof, malonic acid, butanedioic acid and isomer thereof, pentanedioic acid and isomer thereof, hexanedioic acid and isomer thereof, heptanedioic acid and isomer thereof, octanedioic acid and isomer thereof, azelaic acid and isomer thereof, decanedioic acid and isomer thereof, citric acid, tartaric acid, lauric acid, or benzoic acid.

The mixture may optionally further contain salt additive which can be one or more selected from alkyl sulfonate, iron salt of organic acid, polyhydroxy butyrate, stearate salt such as calcium stearate, magnesium stearate, zinc stearate, barium stearate, cerium stearate, and iron stearate, calcium carbonate, calcium dicarbonate, light calcium carbonate, and shell powder, preferably one or more of calcium stearate, zinc stearate, and iron stearate. This additive can be used as lubricant for reducing the friction among components of the material, and between the material and processing equipment. The additive can be used alone or in combination of two or more, and is preferably used in combination. The content of the salt additive may be 0-5 wt%, preferably 0.2-2 wt% based on the total weight of the mixture.

The mixture may further contain conventional auxiliary agents as needed. The auxiliary agent can be one or more of antioxidant, light/heat stabilizer, photo-oxidant, antifogging agent, fire retardant, antistatic agent, coupling agent, colorant, and lubricant. The amount and kind of the used auxiliary agent have been known to those skilled in the art, for example, based on the total weight of the mixture, the content of the auxiliary agent can be 0-5 wt%, preferably 0.3-4 wt%. For preventing and suppressing early degradation of starch due to factors like light, heat, oxygen, microorganism or bacteria during processing, antioxidant and light/heat stabilizer can be added. The antioxidant can be one or more selected from pentaerythritol tetrakis [β-(3,5-di-tert-butyl-4-hydroxyl phenyl)propionate] (antioxidant 1010), distearyl thiodipropionate (antioxidant DSTP), sulfur-containing ester, phosphite ester, composite antioxidant PKY, and biphenol A. Light/heat stabilizer can be one or more selected from UV-series light/heat stabilizer, carbon black, organotin light/heat stabilizer, tri(nonylphenyl) phosphate (TNPP), and epoxidized soybean oil; wherein the UV-series light/heat stabilizer can be α-hydroxy-4-(octyloxy)benzophenone (UV531), and the organotin light/heat stabilizer can be one or more selected from dibutyl tin dilaurate, isooctyl thioglycolate dimethyl tin, ester-based tin compound RWS-784, di-n-octyltin-bis(2-ethylhexyl thioglycolate) (SD 8831), dibulyltin maleate, and di-n-butyltin-bis(2-ethylhexyl thioglycolate). The lubricant may be any conventional ones, such as liquid paraffin and/or petroleum ether, which can lower the friction between the granular material, product and the equipment in order to facilitate the demolding. Those auxiliary agents can be used alone or in combination of two or more.

The hydrophobic biodegradable material provided in the present invention can be prepared by heating to melt a mixture containing polyol, and water-containing polyvinyl alcohol, and optionally containing starch, and then extruding and granulating the molten material.

The water-containing polyvinyl alcohol can be prepared by contacting water with hydrophobic polyvinyl alcohol. The contact condition and the amount of polyvinyl alcohol and water are sufficient to fully swell polyvinyl alcohol. The full swelling of polyvinyl alcohol refers to the weight ratio of polyvinyl alcohol to water in the swollen polyvinyl alcohol, i.e. water-containing polyvinyl alcohol, is from 0.75 to less than 1.5.

The reason for contacting water with the hydrophobic polyvinyl alcohol is that water has small molecular weight, when water contacts with the hydrophobic polyvinyl alcohol alone, water can easily penetrate into inside of polyvinyl alcohol molecule structure to break intermolecular and inner molecular hydrogen bonds of polyvinyl alcohol, extend complicated interwoven polyvinyl alcohol molecule chain to the maximum degree, and help polyol plasticizer enter into internal structure of polyvinyl alcohol molecules, therefore polyvinyl alcohol melting temperature is lowered, and polyvinyl alcohol-containing mixture can realize molten state.

For fully swelling polyvinyl alcohol, the weight ratio of the usage amount of polyvinyl alcohol to the usage amount of water is preferably 0.5-1.2. Since the hydrophobic polyvinyl alcohol can be only dissolved into water higher than 45° C, the hydrophobic polyvinyl alcohol may be contacted with water at a temperature higher than 45° C, preferably 80-105°C (1 atmosphere). It is preferred to add warm water lower than 60° C to the polyvinyl alcohol and then gradually raise the system temperature to 80-105°C under stirring, in order to avoid encrustation or the problem that the exterior of polyvinyl alcohol is swelled while the interior of polyvinyl alcohol is not swelled caused by the direct addition of hot water to the polyvinyl alcohol. The hydrophobic polyvinyl alcohol is preferably contacted with water at a temperature of 80-105° C for 30-60 min under stirring of 50-650 rpm. As mixture of water and polyvinyl alcohol has high viscosity, and stirring resistance is high, a lot of heat will be generated during stirring, the heat will make added water be partially evaporated off. More heat will be generated and more water will be evaporated off as the stirring time is prolonged and the stirring speed is increased. Therefore, at aforementioned contact condition and weight ratio of the used polyvinyl alcohol to the used water, the obtained water-containing polyvinyl alcohol has weight ratio of polyvinyl alcohol to water slightly higher than the weight ratio of the usage amount of polyvinyl alcohol to the usage amount of water. When stirring speed is fast and/or stirring time is long, the amount of the used water can be increased as needed to make the weight ratio of polyvinyl alcohol to water in water-containing polyvinyl alcohol from 0.75 to less than 1.5.

The mixture containing polyol and water-containing polyvinyl alcohol, and optionally containing starch, can be prepared by evenly mixing aforementioned water-containing polyvinyl alcohol, polyol, and optionally contained starch.

When the water-containing polyvinyl alcohol, polyol, and optionally contained starch are mixed, the polyester, polyol, and organic carboxylic acid are preferably added.

When the water-containing polyvinyl alcohol, polyol, and optionally contained starch are mixed, one or more of cellulose-based polymer, salt additive, and auxiliary agent may be added and mixed evenly.

The mixing is preferably carried out under stirring at a stirring speed of 50-650 rpm.

The mixing of components in the mixture can be carried out in random order, for example, water-containing polyvinyl alcohol and optionally contained starch can be mixed evenly, and then mixed with polyol; or optionally contained starch and polyol can be mixed evenly, and then mixed with water-containing polyvinyl alcohol; or water-containing polyvinyl alcohol and polyol are mixed evenly, and then mixed with optionally contained starch; or water-containing polyvinyl alcohol, polyol, and optionally contained starch are mixed evenly. In preferred embodiment, for making polyol exert better plasticization action on water-containing polyvinyl alcohol, water-containing polyvinyl alcohol and polyol are mixed evenly, and then mixed with optionally contained starch.

Based on total weight of the mixture, the water-containing polyvinyl alcohol is added at the amount of 5-70 wt%, preferably 10-60 wt%; polyol is added at the amount of 25-45 wt%, preferably 25-40 wt%; starch is added at the amount of 0-70 wt%, preferably 10-65 wt%; the polyester is added at the amount of 0-20 wt%, preferably 3-10 wt%; the end-capping reagent is added at the amount of 0-15 wt%, preferably 0.5-10 wt%; the organic carboxylic acid is added at the amount of 0.5-10 wt%, preferably 0.5-8 wt%; cellulose-based polymer is added at the amount of 0-10 wt%, preferably 2-6 wt%; salt additive is added at the amount of 0-5 wt%, preferably 0.2-2 wt%; and auxiliary agent is added at the amount of 0-5 wt%, preferably 0.3-4 wt%.

The method and condition for heat melting the mixture, extruding, and granulating are well known to those skilled in the art. For example, twin-screw extruder can be used for extruding and granulating the mixture at the conditions that the twin-screw extruder has length/diameter ratio of 20-64 and screw rotation speed of 50-1500 rpm. The twin-screw extruder is usually divided into 12 sections from feed end to discharge end, wherein from the feed end to discharge end, temperatures for each section are sequentially set at 90-150°C, 95-155°C, 100-160°C, 115-165°C, 120-175°C, 125-175°C, 130-185°C, 135-185°C, 110-180°C, 115-175°C, 120-185°C, and 130-180°C. The fourth and tenth sections are vacuum sections, and the vacuum degree is 0.02-0.09 MPa. The vacuum degree refers to absolute value of difference between absolute pressure and atmospheric pressure (the absolute pressure is lower than the atmospheric pressure). Twin screws of the twin-screw extruder are engaged mutually, when the screw rotation speed is high, such as 500 rpm or higher, the engaged twin screws have intensive friction and shearing actions on material charged into the extruder, and the heat generated from friction and shearing can make real temperature of the material higher than the set temperature of each section.

The detailed steps for preparing the inventive material provided in the present invention are as below:
(1) Allowing polyvinyl alcohol to contact with water and fully swell for 30-60 min under stirring of 50-650rpm to give water-containing polyvinyl alcohol, and mixing evenly the water-containing polyvinyl alcohol, polyol, and optionally contained starch, polyester, end-capping reagent, organic carboxylic acid, cellulose-based polymer, salt additive and auxiliary agent for 5-60min under stirring of to give a mixture, wherein upon mixing the water-containing polyvinyl alcohol, starch, polyol, organic carboxylic acid, and optionally cellulose-based polymer, salt additive and/or auxiliary agent, the stirring is preferably carried out at a low speed first and then at a high speed; and
(2) Adopting twin-screw extruder with length/diameter ratio of 20-64 and screw rotation speed of 50-1200rpm, wherein from the feed end to discharge end, temperatures for each section are sequentially set at 90-150°C, 95-155°C, 100-160°C, 115-165°C, 120-175°C, 125-175°C, 130-185°C, 135-185°C, 110-180°C, 115-175°C, 120-185°C, and 130-180°C, vacuum degree of the vacuum sections is 0.02-0.09 MPa, and the mixture is melted, extruded, and granulated.

The hydrophobic biodegradable material provided in the present invention can be prepared into film product by blow molding. The blow molding method procedure and condition are well known to those skilled in the art, for example, a single-screw extruder can be used, the single-screw extruder is usually divided into six sections from feed end to discharge end, and the temperatures for each section are set at 150°C, 155°C, 165°C, 170°C, 165°C, and 155°C. The obtained material is charged into the extruder, melted and blended at 150°C, 155°C, 165°C, 170°C, 165°C, and 155°C, and blow molded at die of the extruder.

The present invention will be described in further detail, through examples as below.

### Example 1

This example describes the hydrophobic biodegradable material provided in the present invention, and preparation method thereof.
(1) Water of 40°C is charged into polyvinyl alcohol (alcoholysis degree of 96%, and median polymerization degree of 2050) in a weight ratio of polyvinyl alcohol to water of 1.2 under stirring of 500 rpm, and the system is heated to 95°C and then stirred at 95°C for 35min to give water-containing polyvinyl alcohol in which the weight ratio of polyvinyl alcohol to water is 1.48. After the system is cooled to 30°C, 21 weight parts of the obtained water-containing polyvinyl alcohol, 15 weight parts of glycerol, and 15 weight parts of sorbitol are mixed in a mixer under stirring at 100rpm for 20min, and then 40 weight parts of common wheat starch, 2 weight parts of methyl cellulose, 2 weight parts of zinc stearate, 2 weight parts of epoxidized soybean oil, 2 weight parts of liquid paraffin, 0.5 weight part of borax and 0.5 weight part of formaldehyde are mixed wherein the mixer stirs at 100rpm for about 10 min and then at 200rpm for 20min to give mixture M 1 with composition as shown in Table 1.
(2) The aforementioned mixture is charged into feed port of a twin-screw extruder with length/diameter ratio of 48:1 and screw diameter of 58mm; the screw rotation speed is regulated to 900rpm; from feed end to discharge end, temperatures of each section are respectively set at 130°C, 135°C, 140°C, 150°C, 160°C, 165°C, 165°C, 170°C, 175°C, 170°C, 180°C and 170°C; the vacuum degree of the vacuum sections is held at 0.02 to 0.09MPa; strip extrudant with diameter of 3mm is obtained at discharge port of the extruder, which is cut into granules of hydrophobic biodegradable material BSR-07VS-PF1 provided in the present invention with a length of 2mm.

### Comparison example 1

The comparison example describes the polyvinyl alcohol-containing biodegradable material of the prior art and preparation method thereof.
(1) 12.5 weight parts of polyvinyl alcohol (alcoholysis degree of 92% and median polymerization degree of 2050) and 40 weight parts of starch are mixed evenly in a mixer, and further mixed with 10.5 weight parts of water, 15 weight parts of glycerol, 15 weight parts of sorbitol, 2 weight parts of methyl cellulose, 2 weight parts of zinc stearate, 2 weight parts of liquid paraffin, 0.5 weight part of borax, 0.5 weight part of formaldehyde and 2 weight parts of epoxidized soybean oil; the mixer stirs at 100rpm for 20min, and then stirs at 200rpm for 30min to give mixture CM1;
(2) The mixture CM1 is extruded and granulated by method similar to that of step (2) in the example 1, but only powdery carbonized substance without any plasticity is obtained. The possible explanation is that two screws of twin-screw extruder are engaged mutually, the screw ration speed is up to 900rpm, the mutually engaged twin screws have intensive friction and shearing effects on the material charged into the twin-screw extruder, but the polyvinyl alcohol is unplasticized polyvinyl alcohol, the heat generated due to intensive friction and shearing effects can make polyvinyl alcohol reach to its decomposition temperature before polyvinyl alcohol melts and reacts with other components; carbonization of polyvinyl alcohol make the polyvinyl alcohol unable to react with other components to form stable molten reaction products, hence powdery carbonized substance without any plasticity is obtained.

### Example 2

This example describes the hydrophobic biodegradable material provided in the present invention, and preparation method thereof.
(1) Water of 50° C is charged into polyvinyl alcohol (alcoholysis degree of 99.8%, and median polymerization degree of 2450) in a weight ratio of polyvinyl alcohol to water of 1 under stirring of 400 rpm, and the system is heated to 100° C and stirred at 100°C for 55min to give water-containing polyvinyl alcohol in which the weight ratio of polyvinyl alcohol to water is 1.17. After the system is cooled to room temperature, 35 weight parts of the aforementioned water-containing polyvinyl alcohol, 25 weight parts of common potato starch having a number average molecular weight of 200,000, 20 weight parts of glycerol, 5 weight parts of pentaerythritol, 5 weight parts of PHB, 2.0 weight parts of carboxyl methyl cellulose, 3.0 weight parts of zinc stearate, 2.0 weight parts of calcium stearate, 0.5 weight part of liquid paraffin, 1.0 weight part of epoxidized soybean oil, 1.0 weight part of ultrafine carbon black; and 0.5 weight part of antioxidant DSTP are mixed in a mixer, wherein the mixer stirs at 100rpm for 7min and then at 200rpm for 8min to give mixture M2 with composition as shown in Table 1.
(2) The mixture M2 is prepared into hydrophobic biodegradable granular material BSR-07VS-PF2 according to the same method as step (2) in the example 1.

### Example 3

This example describes the hydrophobic biodegradable material provided in the present invention, and preparation method thereof.
(1) Water of 60° C is charged into polyvinyl alcohol (alcoholysis degree of 98%, and median polymerization degree of 2250) in a weight ratio of polyvinyl alcohol to water of 0.6 under stirring of 100 rpm, and the system is heated to 98° C and then stirred at 98°C for 60min to give water-containing polyvinyl alcohol in which the weight ratio of polyvinyl alcohol to water is 0.75. After the system is cooled to 35° C, 60 weight parts of the aforementioned water-containing polyvinyl alcohol, 20 weight parts of sorbitol and 20 weight parts of glycerol are mixed in a mixer, the mixer stirs at 100rpm for 7min and then at 200rpm for 8min to give mixture M3 with composition as shown in Table 1.
(2) The mixture M3 is prepared into hydrophobic biodegradable granular material BSR-07VS-PF3 according to the same method as step (2) in the example 1.

### Example 4

This example describes the hydrophobic biodegradable material provided in the present invention, and preparation method thereof.
(1) Water of 55°C is charged into polyvinyl alcohol (alcoholysis degree of 95%, and median polymerization degree of 2450) in a weight ratio of polyvinyl alcohol to water of 0.8 under stirring of 150 rpm, and the system is heated to 98° C and stirred at 98° C for 55min to give water-containing polyvinyl alcohol in which the weight ratio of polyvinyl alcohol to water is 0.9. After the system is cooled to room temperature, 15 weight parts of the aforementioned water-containing polyvinyl alcohol, and 55 weight parts (dry weight) of common potato starch having a number average molecular weight of 180,000 are mixed in a mixer, and then 12 weight parts of glycerol, 10 weight parts of sorbitol, 3 weight parts of pentaerythritol, 2 weight parts of methyl cellulose, 1.0 weight part of zinc stearate, 0.5 weight part of PHB, 0.5 weight part of borax, 0.5 weight part of petroleum ether, and 0.5 weight part of epoxidized soybean oil are added thereto, wherein the mixer stirs at 100rpm for 7min and then at 200rpm for 8min to give mixture M4 with composition as shown in Table 1.
(2) The mixture M4 is prepared into hydrophobic biodegradable material granules BSR-07VS-PF4 according to the same method as step (2) in the example 1.

### Example 5

This example describes the hydrophobic biodegradable material provided in the present invention, and preparation method thereof.
(1) Water of 40° C is charged into polyvinyl alcohol (alcoholysis degree of 90%, and median polymerization degree of 2050) in a weight ratio of polyvinyl alcohol to water of 0.8 under stirring of 150 rpm, and the system is heated to 98° C and stirred at 98° C for 40min to give water-containing polyvinyl alcohol in which the weight ratio of polyvinyl alcohol to water is 0.9. After the system is cooled to room temperature, 50 weight parts of the aforementioned water-containing polyvinyl alcohol, 12 weight parts of glycerol, 10 weight parts of sorbitol, and 8 weight parts of pentaerythritol are mixed in a mixer, and then 10 weight parts (dry weight) of common corn starch having a number average molecular weight of 100,000, 1 weight part of methyl cellulose, 0.5 weight part of zinc stearate, 0.5 weight part of calcium stearate, 1.0 weight part of dimethyl urea, 0.5 weight part of epoxidized soybean oil, 0.5 weight part of UV-531, 4 weight parts of acetic acid and 2 weight part of succinic acid are added thereto, wherein the mixer stirs at 100rpm for 10min and then at 400rpm for 20min to give mixture M5 with composition as shown in Table 1.
(2) The mixture M5 is prepared into hydrophobic biodegradable granular material BSR-07VS-PF5 according to the same method as step (2) in the example 1.

### Example 6

This example describes the hydrophobic biodegradable material provided in the present invention, and preparation method thereof.
(1) Water of 60° C is charged into polyvinyl alcohol (alcoholysis degree of 98%, and median polymerization degree of 2250) in a weight ratio of polyvinyl alcohol to water of 0.6 under stirring of 100 rpm, and the system is heated to 98° C and stirred at 98° C for 60min to give water-containing polyvinyl alcohol in which the weight ratio of polyvinyl alcohol to water is 0.75. After the system is cooled to 35° C, 35 weight parts of the aforementioned water-containing polyvinyl alcohol, 7 weight parts of glycerol, and 20 weight parts of sorbitol are mixed in a mixer, and then 30 weight parts (dry weight) of common corn starch having a number average molecular weight of 100,000, 5 weight parts of PHB, and 3 weight parts of acetic acid are added thereto, wherein the mixer stirs at 100rpm for 10min and then at 400rpm for 20min to give mixture M6 with composition as shown in Table 1.
(2) The mixture M6 is prepared into hydrophobic biodegradable granular material, BSR-07VS-PF6 according to the same method as step (2) in the example 1.

**Table 1**

| Example No. | Example 1 | Example 2 | Example 3 | Example 4 | Example 5 | Example 6 |
|---|---|---|---|---|---|---|
| Granular product No. | BSR-07VS-PF1 | BSR-07VS-PF 2 | BSR-07VS-PF 3 | BSR-07VS-PF 4 | BSR-07VS-PF 5 | BSR-07VS-PF 6 |
| Mixture No. | M1 | M2 | M3 | M4 | M5 | M6 |
| Mixture composition (wt%) | | | | | | |
| starch | 40 | 25 | - | 55 | 10 | 30 |
| water containing polyvinyl alcohol | 21 | 35 | 60 | 15 | 50 | 35 |
| sorbitol | 15 | - | 20 | 10 | 10 | 20 |
| glycerol | 15 | 20 | 20 | 12 | 12 | 7 |
| pentaerythritol | - | 5 | - | 3 | 8 | - |
| Cellulose-based polymer | 2 | 2 | - | 2 | 1 | - |
| Zinc stearate | 2 | 3 | - | 1 | 0.5 | - |
| Calcium stearate | - | 2 | - | - | 0.5 | - |
| liquid paraffin | 2 | 0.5 | - | - | | - |
| petroleum ether | - | - | - | 0.5 | | - |
| ultrafine carbon black | - | 1 | - | - | - | - |
| antioxidant DSTP | - | 0.5 | - | - | - | - |
| UV-531 | - | - | - | - | 0.5 | - |
| PHB | - | 5 | - | 0.5 | | 5 |
| borax | 0.5 | - | - | 0.5 | - | - |
| formaldehyde | 0.5 | - | - | - | - | - |
| dimethyl urea | - | - | - | - | 1 | - |
| acetic acid | - | - | - | - | 4 | 3 |
| succinic acid | - | - | - | - | 2 | - |
| epoxidized soybean oil | 2 | 1 | - | 0.5 | 0.5 | - |
| Total weight (wt %) | 100 | 100 | 100 | 100 | 100 | 100 |

### Example 7-12

The following examples illustrate properties of the hydrophobic biodegradable material provided in the present invention.

The aforementioned granular products BSR-07VS-PF1 to BSR-07VS-PF6 are respectively charged to feed port of DL-45 extruder (manufactured by Dalian Rubber & Plastics Machinery Co. Ltd.); from feed end to discharge end, temperatures of each section of the extruder are respectively set at 150° C, 155° C, 165° C, 170° C, 165° C, 155° C; the granular product is melted and blow molded at die to give film products PF1-PF6 with dimension of 600mm(width) ×0.03mm(thickness) × 10 kg/roll.

The following methods are used to test properties of aforementioned film products, and the test results are shown in Table 2:

The methods specified in GB/T5009.60-1996 and GB/T5009.60-1996 are used to evaluate appearance of the film products;

The methods specified in GB1040-1992 are used for testing elongation at break, right angle tear strength, and tensile strength at break;

The method specified in ISO14855-99 is used for testing biodegradation rate of the film products.

### Water-resistance test method:

(1) The aforementioned PF1-PF6 products are completely soaked in water at 25° C for 1h, wherein the weight ratio of water to the product is 5. Then the products are taken out, water on its surface is removed, the appearance is observed, and the elongation at break, right angle tear strength, and tensile strength at break are determined. As a result, no significant change is observed in the appearance. Other results are shown in Table 2.
(2) The aforementioned PF1-PF6 products are placed at temperature of 30° C and relative humidity of 70% for 30 days. Then the appearance is observed, and the elongation at break, right angle tear strength, and tensile strength at break are determined. As a result, no significant change is observed in the appearance. Other results are shown in Table 2.

Surface stickiness test for film product comprises respectively cutting PF1-PF6 into 20 film pieces with dimension of 20cm×15cm, dividing the pieces into 10 groups (two pieces for each group), overlapping the two pieces of each group, standing for 48 hr at temperature of 30° C and relative humidity of 70%, pressing the two pieces of each group with pressure of 1000Pa, observing whether the two pieces of each group stick together, and recording number of the group in which the pieces stuck together. Meanwhile, it is observed whether oily liquid beads appear on the surface of the products.

In Table 2, A represents the elongation at break, right angle tear strength, and tensile strength at break of the product determined immediately after preparation, while B represents the elongation at break, right angle tear strength, and tensile strength at break of the product determined after soaking in water for 1h, and C represents the elongation at break, right angle tear strength, and tensile strength at break of the product determined after keeping at relative humidity of 70% for 30 days.

**Table 2**

| Test items | | PF1 | PF2 | PF3 | PF4 | PF5 | PF6 |
|---|---|---|---|---|---|---|---|
| Appearance | | Odorless, no foreign matter, no malodor | | | | | |
| | Transversal direction A | 66 | 65 | 79 | 47 | 70 | 64 |
| | Transversal direction B | 63 | 64 | 74 | 44 | 69 | 62 |
| Tensile | Transversal direction C | 62 | 63 | 73 | 46 | 68 | 60 |
| strength at break (MPa) | Longitudinal direction A | 69 | 69 | 82 | 52 | 73 | 69 |
| | Longitudinal direction B | 66 | 68 | 76 | 49 | 72 | 67 |
| | Longitudinal direction C | 67 | 68 | 76 | 50 | 72 | 65 |
| | Transversal direction A | 386 | 398 | 408 | 255 | 400 | 395 |
| | Transversal direction B | 382 | 397 | 397 | 253 | 398 | 392 |
| Elongation at | Transversal direction C | 383 | 397 | 398 | 253 | 397 | 392 |
| break (%) | Longitudinal direction A | 325 | 375 | 388 | 240 | 385 | 372 |
| | Longitudinal direction B | 320 | 374 | 381 | 240 | 382 | 369 |
| | Longitudinal direction C | 322 | 373 | 380 | 239 | 383 | 368 |
| | Transversal direction A | 97 | 115 | 130 | 60 | 121 | 113 |
| | Transversal direction B | 95 | 114 | 122 | 54 | 119 | 110 |
| Right angle tear strength | Transversal direction C | 96 | 113 | 121 | 56 | 119 | 110 |
| (N/mm) | Longitudinal direction A | 86 | 108 | 120 | 54 | 116 | 104 |
| | Longitudinal direction B | 84 | 107 | 112 | 51 | 114 1 | 02 |
| | Longitudinal direction C | 85 | 107 | 113 | S2 | 114 | 101 |
| | 45th day | 61.23 | 60.75 | 60.96 | 61.50 | 61.46 | 61.35 |
| Biodegradation ratio (%) | 60th day | 75.01 | 74.82 | 74.93 | 75.40 | 75.29 | 75.12 |
| | 99th day | 91.29 | 90.95 | 91.13 | 91.45 | 91.38 | 91.21 |
| Surface stickiness (group number) | | 5 | 2 | 6 | 3 | 0 | 0 |
| oily liquid beads appear on the surface | | Yes | Yes | Yes | Yes | No | No |

It can be observed from the results shown in Table 2 that PF1-PF6 film products prepared from hydrophobic biodegradable granular materials BSR-07VS-PF1 to BSR-07VS-PF6 in the examples 1-6 have good tensile strength at break, elongation at break, and right angle tear strength, and their biodegradation degree is extremely high (above 60% at 45th day, above 75% at 60th day, and above 92% at 99th day), which complies to the requirement (above 90% within 180 days) for biodegradable product prescribed in ISO 14855. The products have excellent water-resistance, and have very little change in terms of tensile strength at break, elongation at break, and right angle tear strength after soaking in water for 1h or keeping at relative humidity of 70% for 30 days, indicating that it is safe to use the water-resistant film product of the present invention at humid conditions. In examples 1, 2 and 4-6, the polyester and/or end-capping reagent is used during preparing the hydrophobic material while the polyester or end-capping reagent is not used in example 3, such that compared with the film prepared from the hydrophobic biodegradable granular material BSR-07VS-PF3; the film prepared from the hydrophobic biodegradable granular materials BSR-07VS-PF1, BSR-07VS-PF2, and BSR-07VS-PF4 to BSR-07VS-PF6 have less change in terms of tensile strength at break, elongation at break, and right angle tear strength after soaking in water for 1h or keeping at relative humidity of 70% for 30 days, indicating that their water-resistance is better.

Organic carboxylic acid is added during preparation of the hydrophobic biodegradable materials BSR-07VS-PF5 and BSR-07VS-PF6 in the example 5 and 6, and the film products PF5 and PF6 prepared from BSR-07VS-PF5 and BSR-07VS-PF6 exhibit no sticking or no oily liquid beads appear on the surface; therefore, compared with the film products PF1-PF4 prepared from the hydrophobic biodegradable granular materials BSR-07VS-PF1 to BSR-07VS-PF4, PF5-PF6 film products prepared from BSR-07VS-PF5 and BSR-07VS-PF6 have significantly lower surface stickiness, and will not cause sticking among multiple products or different parts of single product in application.

### Example 13

The example describes melting and thermal decomposition properties of hydrophobic biodegradable material provided in the example 1 of the present invention.

The melting and thermal decomposition properties of the hydrophobic biodegradable granular material BSR-07VS-PF1 prepared in the example 1 are tested according to the following method.

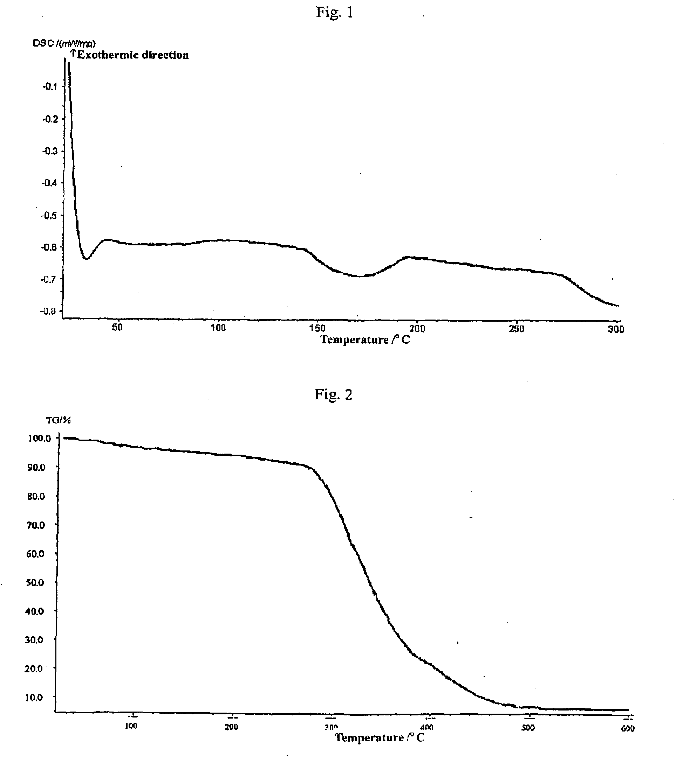

About 4.7 mg hydrophobic biodegradable granular material BSR-07VS-PF1 obtained in the example 1 is accurately weighed, placed in a sample cell of NETZSCH DSC 204F1 Differential Scanning Calorimeter, heated from 25° C to 180° C at 10° C/min under protection of nitrogen gas with flow rate of 60 ml/min, held at 180° C for 2min, and heated at 10°C/min to 300° C to give DSC curve as shown in Fig.1.

About 4.7 mg hydrophobic biodegradable granular material BSR-07VS-PF1 obtained in the example 1 are accurately weighed, placed in a sample cell of TG209F1 Thermal Gravimetric Analyzer (NETZSCH-Geraetebau GmbH, Selb/Germany), heated from 25° C to 180C at 10° C/min under protection of nitrogen gas with flow rate of 60 ml/min, held at 180° C for 2min, and heated at 10° C/min to 300° C to give TG curve as shown in Fig.2.

It can be observed from Fig. 1, the DSC curve of the sample shows a heat absorption peak at temperature range of 145° C-190° C, and 272° C, respectively. It can be observed from Fig.2, the sample quickly loses its weight within temperature range of 272°C-375°C, while showing substantially no weight loss within temperature range of 145°C-190°C. Combining results of Fig. 1 and Fig. 2, the heat absorption peak within 145°C-190°C of sample DSC curve is caused by heat absorption of sample melting; the heat absorption peak at about 272° Cis accompanied by rapid weight loss of the sample, indicating that the sample decomposes at that temperature, and those heat absorption peaks are caused by sample decomposition. Therefore, the granular material obtained in the example 1 can achieve stable molten state at wide temperature range of 145° C-190° C which is dramatically lower than the decomposition temperature of the material, and the material can be thermoplastically processed in wide temperature range. As shown in Table 2, film prepared by melting and blow molding the granular material in the example 1 has excellent tensile strength at break, right angle tear strength, and elongation at break compared with common cast film. These results further explain that the material provided in the present invention is a novel thermoplastic material completely different from the simple mixture containing polyvinyl alcohol, starch, and plasticizer. The melting temperature of the material is dramatically lower than its decomposition temperature, and is also much lower than the decomposition temperature of polyvinyl alcohol or starch.

### Example 14

This example describes properties of the hydrophobic biodegradable material in the present invention.

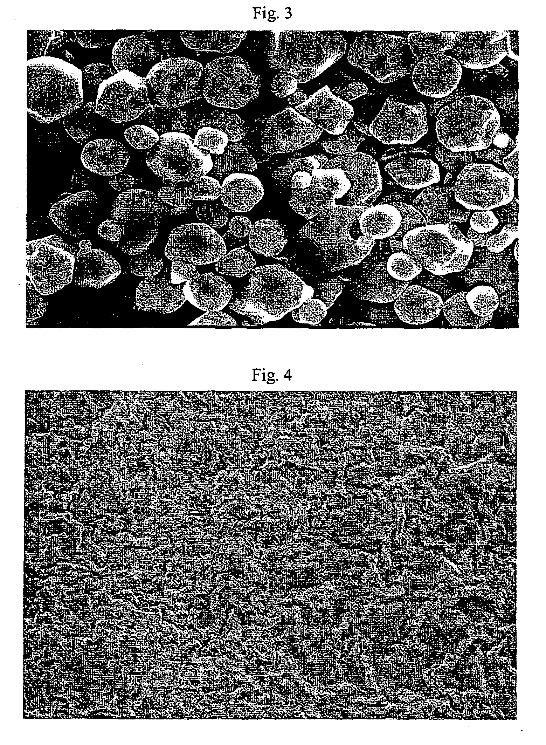

Fig. 3 and Fig. 4 respectively show SEM images (2000x) of cross sections of original granular starch used in the example 1 and the hydrophobic biodegradable granular material BSR-07V-PF1 prepared in the example 1. The SEM images are obtained by using JSM5600LV scanning electron microscope (JEOL).

It can be clearly observed from Fig. 3 that the starch particles are spherical particles, while in Fig. 4 no starch particles can be observed. This indicates that during preparation of the granular material in the example 1, the starch particles are fully fined under the shearing force of twin screws of twin-screw extruder, and the starch is formed into a single uniform product with other components rather than a simple physically mixed mixture. This further explains that the hydrophobic biodegradable material provided in the present invention is a novel material completely different from the simple mixture containing polyvinyl alcohol, starch, and plasticizer.

Moreover, results in Table 2 show that the product prepared from the hydrophobic biodegradable material provided by the present invention has significantly improved mechanical properties, such as tensile strength at break, elongation at break, and right angle tear strength, superior to those of products prepared from any single component in the material. This also explains that the material provided by the present invention is a totally new reaction product completely different from the simple mixture of the prior art.

## Claims

1. A method for preparing a hydrophobic biodegradable material, comprising the following steps:
(1) allowing hydrophobic polyvinyl alcohol to contact with water alone and fully swell to give water-containing polyvinyl alcohol;
(2) mixing the water-containing polyvinyl alcohol with polyol, and optionally starch, to obtain a mixture, wherein the content of the polyol is 25-45 wt% based on the total weight of the mixture, and wherein the polyol is one or more selected from ethylene glycol, diethylene glycol, propylene glycol, glycerol, sorbitol, polyethylene glycol or its condensate having a molecular weight of 400 or lower, pentaerythritol, and incomplete esterification product of long-chain fatty acid; and
(3) melting the said mixture, and then extruding and granulating the molten material.

2. The method according to claim 1, wherein the contact condition and the usage amount of polyvinyl alcohol and water are such that the weight ratio of polyvinyl alcohol to water in the water-containing polyvinyl alcohol is from 0.75 to less than 1.5.

3. The method according to claim 2, the weight ratio of the usage amount of polyvinyl alcohol to the usage amount of water is 0.5-1.2.

4. The method according to claim 1, wherein the contact condition comprises contacting polyvinyl alcohol and water at 80-105°C for 30-60 min under stirring.

5. The method according to claim 1, wherein based on the total weight of the obtained mixture, water-containing polyvinyl is added at the amount of 10-65wt%, starch is added at the amount of 10-65wt%, and polyol is added at the amount of 25-40wt%.

6. The method according to any one of claims 1-5, wherein the hydrophilic polyvinyl alcohol has an alcoholysis degree of 80-100%, and median polymerization degree of

7. The method according to claim 1, wherein the process of extruding and granulating is carried out by using a twin-screw extruder at the conditions that the twin-screw extruder has length/diameter ratio of 20-64 and screw rotation speed of 50-1500rpm, temperature for each section are sequentially set at 90-150°C, 95-155°C, 100-160°C, 115-165°C. 120-175°C, 125-175°C, 130-185°C, 135-185°C, 110-180°C, 115-175°C, 120-185 °C and 130-180°C, the fourth and tenth sections are vacuum sections and vacuum degree of the vacuum sections is 0.02-0.09MPa.

8. The method according to claim 1, wherein in step (2), polyester is further added in an amount of 0.5-15 wt% based on the total weight of the mixture, and the polyester is one or more selected from polycaprolactone, polycarbonate, poly β-hydrobutyrate.

9. The method according to claim 1, wherein in step (2), an end-capping reagent is further added in an amount of 0.5-15 wt% based on the total weight of the mixture, and the end-capping reagent is one or more selected from borax, boric acid, formaldehyde, bialdehyde, trimethyl melamine, bimethyl urea, bimethyl ethyl urea, dichromate, chromium nitrate, and organotitanate.

10. The method according to claim 1, wherein in step (2), an organic carboxylic acid having 1-20 carbon atoms is further added in an amount of 0.5-10 wt% based on the total weight of the mixture.

## Patentansprüche

1. Verfahren zur Herstellung eines hydrophoben, biologisch abbaubaren Materials, das die folgenden Schritte umfasst:
(1) Ermöglichen, dass hydrophober Polyvinylalkohol allein mit Wasser in Kontakt kommt und vollständig aufquillt, um wasserhaltigen Polyvinylalkohol zu ergeben;
(2) Mischen des wasserhaltigen Polyvinylalkohols mit Polyol und gegebenenfalls Stärke, um ein Gemisch zu erhalten, wobei der Polyolgehalt 25 bis 45 Gew.-%, basierend auf dem Gesamtgewicht des Gemischs, beträgt, und wobei das Polyol eines oder mehrere, ausgewählt aus Ethylenglycol, Diethylenglycol, Propylenglycol, Glycerol, Sorbitol, Polyethylenglycol oder dessen Kondensat, das ein Molekulargewicht von 400 oder darunter aufweist, Penterythritol und einem unvollständigen Veresterungsprodukt langkettiger Fettsäure ist; und
(3) Schmelzen des Gemischs und dann Extrudieren und Granulieren des geschmolzenen Materials.

2. Verfahren nach Anspruch 1, wobei die Kontaktbedingung und die verwendete Menge an Polyvinylalkohol und Wasser so ist, dass das Gewichtsverhältnis von Polyvinylalkohol zu Wasser in dem wasserhaltigen Polyvinylalkohol 0,75 bis weniger als 1,5 beträgt.

3. Verfahren nach Anspruch 2, wobei das Gewichtsverhältnis der verwendeten Menge an Polyvinylalkohol zur verwendeten Menge an Wasser 0,5 bis 1,2 beträgt.

4. Verfahren nach Anspruch 1, wobei die Kontaktbedingung das Inkontaktbringen von Polyvinylalkohol und Wasser bei 80 bis 105°C für 30 bis 60 Min. unter Rühren umfasst.

5. Verfahren nach Anspruch 1, wobei, basierend auf dem Gesamtgewicht des erhaltenen Gemischs, wasserhaltiges Polyvinyl in der Menge von 10 bis 65 Gew.-% zugegeben wird, Stärke in der Menge von 10 bis 65 Gew.-% zugegeben wird und Polyol in der Menge von 25 bis 40 Gew.-% zugegeben wird.

6. Verfahren nach einem der Ansprüche 1 bis 5, wobei der hydrophile Polyvinylalkohol einen Alkoholysegrad von 80 bis 100 % und einen mittleren Polymerisationsgrad von 2.000 bis 3.000 aufweist.

7. Verfahren nach Anspruch 1, wobei das Verfahren zum Extrudieren und Granulieren unter Verwendung eines Doppelschneckenextruders unter Bedingungen durchgeführt wird, bei denen der Doppelschneckenextruder ein Längen-Durchmesser-Verhältnis von 20 bis 64 und eine Schneckenumlaufgeschwindigkeit von 50 bis 1500 U/Min. aufweist, wobei die Temperatur für jeden Abschnitt nacheinander auf 90 bis 150°C, 95 bis 155°C, 100 bis 160°C, 115 bis 165°C, 120 bis 175°C, 125 bis 175°C, 130 bis 185°C, 135 bis 185°C, 110 bis 180°C, 115 bis 175°C, 120 bis 185°C und 130 bis 180°C eingestellt wird, wobei die vierten und zehnten Abschnitte Vakuumabschnitte sind und der Vakuumgrad der Vakuumabschnitte 0,02 bis 0,09 MPa beträgt.

8. Verfahren nach Anspruch 1, wobei in Schritt (2) ferner Polyester in einer Menge von 0,5 bis 15 Gew.-%, basierend auf dem Gesamtgewicht des Gemischs, zugegeben wird, und der Polyester einer oder mehrere, ausgewählt aus Polycaprolacton, Polycarbonat, Poly-β-hydrobutyrat ist.

9. Material nach Anspruch 1, wobei in Schritt (2) ferner ein endgruppengeschütztes Reagens in einer Menge von 0,5 bis 15 Ges.-%, basierend auf dem Gesamtgewicht des Gemischs, zugegeben wird und das endgruppengeschützte Reagens eines oder mehrere, ausgewählt aus Borax, Borsäure, Formaldehyd, Bialdehyd, Trimethylmelamin, Bimethylharnstoff, Bimethylethylharnstoff, Dichromat, Chromnitrat und Organotitanat ist.

10. Verfahren nach Anspruch 1, wobei in Schritt (2) ferner eine organische Carbonsäure, die 1 bis 20 Kohlenstoffatome aufweist, in einer Menge von 0,5 bis 10 Gew.-%, basierend auf dem Gesamtgewicht des Gemischs, zugegeben wird.

## Revendications

1. Procédé de préparation d'un matériau biodégradable hydrophobe, comprenant les étapes suivantes :
(1) laisser un alcool polyvinylique hydrophobe venir en contact avec de l'eau seule et gonfler complètement pour donner un alcool polyvinylique contenant de l'eau ;
(2) mélanger l'alcool polyvinylique contenant de l'eau avec un polyol, et éventuellement de l'amidon, de façon à obtenir un mélange, dans lequel la teneur en polyol est de 25 à 45 % en poids sur base du poids total du mélange, et dans lequel le polyol est un ou plusieurs composés choisis parmi l'éthylène glycol, le diéthylène glycol, le propylène glycol, le glycérol, le sorbitol, le polyéthylène glycol ou son condensat ayant une masse moléculaire de 400 ou plus basse, le pentaérythritol, et un produit d'estérification incomplète d'un acide gras à longue chaîne ; et
(3) fondre ledit mélange, puis extruder et granuler le matériau fondu.

2. Procédé selon la revendication 1, dans lequel la condition de contact et la quantité d'utilisation d'alcool polyvinylique et d'eau sont telles que le rapport pondéral d'alcool polyvinylique sur eau dans l'alcool polyvinylique contenant de l'eau va de 0,75 à moins de 1,5.

3. Procédé selon la revendication 2, dans lequel le rapport pondéral de la quantité d'utilisation d'alcool polyvinylique sur la quantité d'utilisation de l'eau va de 0,5 à 1,2.

4. Procédé selon la revendication 1, dans lequel la condition de contact comprend la mise en contact de l'alcool polyvinylique et de l'eau entre 80 et 105°C pendant 30 à 60 min sous agitation.

5. Procédé selon la revendication 1, dans lequel sur base du poids total du mélange obtenu, du polyvinyle contenant de l'eau est ajouté à raison de 10 à 65 % en poids, de l'amidon est ajouté à raison de 10 à 65 % en poids, et du polyol est ajouté à raison de 25 à 40 % en poids.

6. Procédé selon l'une quelconque des revendications 1 à 5, dans lequel l'alcool polyvinylique hydrophile a un degré d'alcoolyse de 80 à 100 %, et un degré médian de polymérisation de 2000 à 3000

7. Procédé selon la revendication 1, dans lequel le procédé d'extrusion et de granulation est effectué en utilisant une extrudeuse à vis jumelées aux conditions ou l'extrudeuse à vis jumelées a un rapport longueur/diamètre de 20 à 64 et une vitesse de rotation de vis de 50 à 1500 tr/min, la température pour chaque section est réglée successivement à 90-150 °C, 95-155°C, 100-160°C, 115-165 °C, 120-175 °C, 125-175 °C, 130-185 °C, 135-185 °C, 110-180 °C, 115-175 °C, 120-185°C et 130-180 °C, les quatrième et dixième sections sont des sections sous vide et le degré de vide des sections sous vide va de 0,02 à 0,09 MPa.

8. Procédé selon la revendication 1, dans lequel dans l'étape (2), du polyester est en outre ajouté en une quantité de 0,5 à 15 % en poids sur base du poids total du mélange, et le polyester est un ou plusieurs composés choisis parmi le polycaprolactone, le polycarbonate, le poly β-hydrobutyrate.

9. Procédé selon la revendication 1, dans lequel dans l'étape (2), un réactif de coiffe terminale est en outre ajouté en une quantité de 0,5 à 15 % en poids sur base du poids total du mélange, et le réactif de coiffe terminale un ou plusieurs composés choisis parmi le borax, l'acide borique, le formaldéhyde, le bialdéhyde, la triméthylmélamine, la biméthyl-urée, la biméthyl-éthyl-urée, le dichromate, le nitrate de chrome, et un organotitanate.

10. Procédé selon la revendication 1, dans lequel dans l'étape (2), un acide carboxylique organique ayant 1 à 20 atomes de carbone est en outre ajouté en une quantité de 0,5 à 10 % en poids sur base du poids total du mélange.
